# EUROPÄISCHE PATENTANMELDUNG

(11) **EP 1 932 722 A2**
(43) Veröffentlichungstag der Anmeldung: **18.06.2008**
(21) Anmeldenummer: 07023940.5
(22) Anmeldetag: 11.12.2007
(51) Int. Cl.: B60R 5/04, B60R 21/06

(54) **Rolloanordnung**

(30) Priorität: 15.12.2006 DE 102006061507
(71) Anmelder: BOS GmbH & Co. KG, 73760 Ostfildern (DE)
(72) Erfinder: Müller, Christian, 70190 Stuttgart (DE)
(74) Vertreter: Patentanwälte Ruff, Wilhelm, Beier, Dauster & Partner

(57) **Zusammenfassung**

Die Erfindung betrifft eine Rolloanordnung (10) zur Verwendung innerhalb eines Fahrzeugs, mit einem sich in eine Haupterstreckungsrichtung (2) der Rolloanordnung (10) erstreckenden Gehäuse (20,30), einer in das Gehäuse (20,30) eingesetzten Rollowelle (40), die sich in Haupterstreckungsrichtung (2;102) erstreckt, einem flexiblen Flächengebilde (42), das im Gehäuse (20,30) auf der Rollowelle (40) aufgerollt lagerbar und aus dem Gehäuse (20,30) quer zur Haupterstreckungsrichtung (2) in eine Funktionslage ausziehbar ist, mindestens einer Arretierungsklinke (80), die im Bereich eines ersten Gehäuseendes und zum Zusammenwirken mit einer ersten fahrzeugfesten Aufnahme (90) vorgesehen ist und die zwischen einem Arretierungszustand und einem gelösten Zustand beweglich ist, und mindestens einer Betätigungshandhabe (70), mittels derer die mindestens eine damit wirkverbundene Arretierungsklinke (80) bewegbar ist.

Erfindungsgemäß ist die mindestens eine Arretierungsklinke (80;180;280) sowohl im Arretierungszustand als auch im gelösten Zustand in Haupterstreckungsrichtung (2;102) auf Höhe der Rollowelle (40) angeordnet.

## Beschreibung

### Anwendungsgebiet und Stand der Technick

Die Erfindung betrifft eine Rolloanordnung zur Verwendung innerhalb eines Fahrzeugs, mit einem sich in eine Haupterstreckungsrichtung der Rolloanordnung erstreckenden Gehäuse, einer in das Gehäuse eingesetzten Rollowelle, die sich in Haupterstreckungsrichtung erstreckt, einem flexiblen Flächengebilde, das im Gehäuse auf der Rollowelle aufgerollt lagerbar und aus dem Gehäuse quer zur Haupterstreckungsrichtung in eine Funktionslage ausziehbar ist, mindestens einer Arretierungsklinke, die im Bereich eines ersten Gehäuseendes und zum Zusammenwirken mit einer ersten fahrzeugfesten Aufnahme vorgesehen ist und die zwischen einem Arretierungszustand und einem gelösten Zustand beweglich ist, und mindestens einer Betätigungshandhabe, mittels derer die mindestens eine damit wirkverbundene Arretierungsklinke bewegbar ist.

Derartige Rolloanordnungen sind aus dem Stand der Technik bekannt. Mittels des flexiblen Flächengebildes können sie beispielsweise zur horizontalen Abdeckung eines Laderaums oder auch als vertikal ausgerichtete Trennwandung zwischen einem Laderaum und einem Personenbereich des Innenraums eines Fahrzeugs verwendet werden. Gattungsgemäße Rolloanordnungen werden üblicherweise nur fallweise in Fahrzeuge eingesetzt, wenn der entsprechende Bedarf gegeben ist. Sie müssen deshalb leicht entfernbar und einsetzbar sein. Weiterhin ist es gewünscht, dass der Fahrzeuginnenraum keine umfangreichen Aufnahmebestandteile umfasst, die bei entfernter Rolloanordnung optisch oder funktionell störend sind.

Zur Arretierung gattungsgemäßer Rolloanordnungen innerhalb des Fahrzeugs sind an der Rolloanordnung üblicherweise Arretierungsklinken vorgesehen, die eine in der Regel formschlüssige Verbindung mit korrespondierenden fahrzeugfesten Aufnahmen gestatten. Diese Arretierungsklinken sind bei den aus dem Stand der Technik bekannten Rolloanordnungen in einem Außenbereich links- und rechtsseitig neben der Rollowelle angeordnet. Der zugehörige Mechanismus zum Lösen und Sperren der Arretierungsklinken ist üblicherweise ebenfalls im Außenbereich jenseits des Flächengebildes angeordnet.

Als nachteilig hieran wird angesehen, dass nicht die vollständige Breite des Gehäuses für das auf der Rollowelle aufgewickelte Flächengebilde genutzt werden kann, so dass das Gehäuses stets signifikant breiter ist als das Flächengebilde.

Aus der DE 102 18 632 C1 ist eine Kfz-Sicherheitseinrichtung bekannt, die über einen Hebel, der in etwa um eine in Fahrzeuglängsrichtung verlaufende Schwenkachse schwenkbar ausgebildet ist, ein gleichzeitiges Betätigen zweier Arretierstifte gestattet. Diese werden zum Sperren in Haupterstreckungsrichtung aus dem Gehäuse herausgeschoben, um in fahrzeugfeste Ausnehmungen einzurücken, so dass eine formschlüssige Verbindung zwischen der Sicherheitseinrichtung und dem Fahrzeug geschaffen wird.

Als nachteilig an dieser aus dem Stand der Technik bekannten Sicherheitseinrichtung wird angesehen, dass es die Auslenkung der Arretierungsklinken nach außen über die Gehäusebreite hinaus erforderlich macht, die die mögliche maximale Breite des Gehäuses selbst verringern.

### Aufgabe und Lösung

Aufgabe der Erfindung ist es deshalb, eine gattungsgemäße Rolloanordnung in Hinblick auf eine kompakte Gestaltung und eine einfache Handhabung weiterzubilden.

Erfindungsgemäß wird dies durch eine gattungsgemäße Rolloanordnung erreicht, bei der die mindestens eine Arretierungsklinke sowohl im Arretierungszustand als auch im gelösten Zustand in Haupterstreckungsrichtung auf Höhe der Rollowelle angeordnet ist. Unter der Arretierungsklinke ist im Zusammenhang mit dieser Erfindung ein Sperrelement zu verstehen, das an der Rolloanordnung angebracht ist und gegenüber dem Gehäuse der Rolloanordnung derart beweglich ist, dass es in einen Arretierungszustand bewegt werden kann, in dem es zusammenwirkend mit einer fahrzeugfesten Aufnahme eine feste Verbindung zwischen Rolloanordnung und Fahrzeuginnenraum schafft. Die Arretierungsklinke kann beispielsweise als axial verschiebbarer Arretierungsstift oder als schwenkbarer Arretierungshebel ausgebildet sein. Die Arretierungsklinke kann durch eine Handhabe betätigt werden, wobei vorzugsweise die Arretierungsklinke beim Loslassen der Handhabe federkraftbeaufschlagt die Arretierungsstellung einnimmt. Durch die Art der Anordnung, bei der die Arretierungsklinke auf Höhe der Rollowelle angeordnet ist, also weder im Arretierungszustand noch im gelösten Zustand in Haupterstreckungsrichtung, bei einer Laderaumabdeckung also in Fahrzeugquerrichtung, über die Rollowelle hinausragt, wird erreicht, dass das Gehäuse der Rolloanordnung nur unwesentlich breiter als die Rollowelle und das auf der Rollowelle aufgewickelte Flächengebilde ausgebildet sein muss. Zusätzlicher Bauraum in Haupterstreckungsrichtung zur Aufnahme der Sperrklinke oder anderer Bestandteile, die der Sperrklinke zugeordnet sind, muss nicht vorgesehen sein. Die Sperrklinke ist stattdessen in Richtung der Haupterstreckungsrichtung gesehen neben, unterhalb oder oberhalb des in Staulage befindlichen Flächengebildes vorgesehen.

Bei einer Weiterbildung der Erfindung ist die Arretierungsklinke orthogonal zur Haupterstreckungsrichtung beweglich ausgebildet. Die Arretierungsklinke ist dabei vorzugsweise unterhalb des Flächengebildes vorgesehen. Besonders bevorzugt ist es, wenn die fahrzeugfeste Aufnahme als in Fahrzeuglängsrichtung erstrecktes Profil vorgesehen ist, in das die Rolloanordnung eingeschoben werden kann, wobei das Profil eine Ausnehmung aufweist, in die das Arretierungsklinke einrücken kann, um ein Herausziehen der Rolloanordnung zu verhindern.

Bei einer Weiterbildung der Erfindung ist auch die mindestens eine Betätigungshandhabe in Haupterstreckungsrichtung auf Höhe der Rollowelle angeordnet ist. Gemäß dieser Weiterbildung ragt die Betätigungshandhabe über die Rollowelle oder das auf ihr aufgewickelte Flächengebilde nicht hinaus. Durch diese Anordnung der Betätigungshandhabe wird erreicht, dass sowohl die Betätigungshandhabe als auch die Arretierungsklinke in Haupterstreckungsrichtung neben oder unterhalb beziehungsweise oberhalb des Flächengebildes angeordnet sind. Dies führt dazu, dass auch die Betätigungshandhabe eine bauliche Verbreiterung der Rolloanordnung nicht erforderlich macht.

Bei einer Weiterbildung der Erfindung ist die Betätigungshandhabe an einer Oberseite der Rolloanordnung vorgesehen und die Arretierungsklinke an einer Unterseite der Rolloanordnung vorgesehen. Diese Verteilung ist besonders geeignet, um die Betätigungshandhabe und die Arretierungsklinke als notwendige Bestandteile der Mechanik der Rolloanordnung im Bereich des Flächengebildes anzuordnen, ohne die bauliche Größe der Rolloanordnung wesentlich zu vergrößern.

Die Arretierungsklinke ist dabei vorzugsweise mittels eines Übertragungshebels mit der Bestätigungshandhabe verbunden, wobei der Übertragungshebel eine konkave Einbuchtung zur mindestens teilweisen Aufnahme des flexiblen Flächengebildes aufweist. Der Übertragungshebel weist zu diesem Zweck eine in etwa U- bzw. V-förmige Form auf, die es erlaubt, die oberhalb des Flächengebildes angeordnete Betätigungshandhabe mit der unterhalb des Flächengebildes angeordneten Arretierungsklinke in Wirkverbindung zu setzen, ohne dass das Flächengebilde in seiner Staulage beeinträchtigt wird. Besonders vorteilhaft ist es, wenn die Betätigungshandhabe und/oder die Arretierungsklinke mit dem Übertragungshebel einstückig ausgebildet sind.

Bei einer Weiterbildung der Erfindung ist das Gehäuse mehrteilig ausgebildet und weist in Haupterstreckungsrichtung aneinander angrenzend mindestens einen Hauptabschnitt sowie einen Seitenabschnitt auf, wobei der Seitenabschnitt die mindestens eine Betätigungshandhabe und die mindestens eine Arretierungsklinke beinhaltet oder abdeckt. Diese Gestaltung des Gehäuses erlaubt eine besonders einfache Montierbarkeit, da ein separater Zugang zu den Arretierungsklinken und der Betätigungshandhabe möglich ist, ohne den Hauptabschnitt des Gehäuses entfernen zu müssen. Der Seitenabschnitt des Gehäuses muss nicht geschlossen sein. Stattdessen ist es ausreichend, wenn der Seitenabschnitt eine Oberseite und vorzugsweise daran angrenzende Seitenteile aufweist.

Die Aufgabe der Erfindung wird ebenfalls durch eine gattungsgemäße Rolloanordnung, insbesondere als Weiterbildung der oben beschriebenen Rolloanordnung, gelöst, die eine zweite Arretierungsklinke im Bereich eines dem ersten Gehäuseende gegenüberliegenden zweiten Gehäuseendes aufweist, wobei die zweite Arretierungsklinke zum Zusammenwirken mit einer zweiten fahrzeugfesten Aufnahme vorgesehen ist und mittels eines Übertragungsmittels mit der Betätigungshandhabe wirkverbunden ist, wobei die erste und die zweite Arretierungsklinke mittels der Betätigungshandhabe gemeinsam zwischen einem Arretierungszustand und einem gelösten Zustand orthogonal zur Haupterstreckungsrichtung bewegbar sind. Hierdurch wird erreicht, dass mit nur einer Betätigungshandhabe beide Arretierungsklinken aus ihrem Arretierungszustand in ihrem gelösten Zustand überführt werden können. Dabei ist durch die Ausprägung der Arretierungsklinken für eine Bewegung orthogonal zur Haupterstreckungsrichtung eine Platz sparende Anordnung im Sinne der oben beschriebenen Gestaltung möglich, bei der die Arretierungsklinken in Haupterstreckungsrichtung weder im Arretierungszustand noch im gelösten Zustand über das Flächengebilde hinausragen. Die Betätigungshandhabe kann dabei mit der ersten Arretierungsklinke unmittelbar und mit der zweiten Arretierungsklinke über das Übertragungsmittel verbunden sein. Möglich sind auch Ausgestaltungen, bei denen die Betätigungshandhabe mit beiden Arretierungsklinken mittels des Übertragungsmittels wirkverbunden ist.

Besonders bevorzugt ist eine Weiterbildung, bei der das Übertragungsmittel eine um eine Drehachse drehbare Übertragungswelle ist, die in Haupterstreckungsrichtung verläuft und die vorzugsweise unterhalb des flexiblen Flächengebildes in seiner Staulage angeordnet ist. Die Ausbildung als drehbare Übertragungswelle gestattet eine besonders einfache Wirkverbindung des Übertragungsmittels mit einem oder beiden Arretierungsklinken. Die Arretierungsklinken können dazu beispielsweise als unmittelbar an der Übertragungswelle angeformte oder mit dieser lösbar drehfest verbundene Sperrklinken ausgebildet sein. Die Anordnung der Übertragungswelle unterhalb des flexiblen Flächengebildes in seiner Staulage ermöglicht es, die Erstreckung der Rolloanordnung in Fahrzeuglängsachse gering zu halten.

Bei einer bevorzugten Weiterbildung ist je eine Betätigungshandhabe an beiden Gehäuseenden vorgesehen, wobei beide Betätigungshandhaben mittels des Übertragungsmittels mit beiden Arretierungsklinken wirkverbunden sind. Das Vorsehen zweier Betätigungshandhaben an den jeweiligen Gehäuseenden erlaubt es, die Rolloanordnung in besonders einfacher Art und Weise unabhängig vom Standort des Bedieners zu lösen. So kann der Bediener insbesondere bei einer Laderaumabdeckung von den Seitentüren aus bequem beide Arretierungsklinken lösen.

Bei einer bevorzugten Ausprägung sind die Betätigungshandhaben mit jeweils einer Arretierungsklinke unmittelbar, insbesondere einstückig, verbunden und mit der jeweils anderen Arretierungsklinke über das Übertragungsmittel verbunden.

Bei einer Weiterbildung der Erfindung ist die Betätigungshandhabe ein schwenkbarer Betätigungshebel, wobei der Betätigungshebel vorzugsweise um eine zur Haupterstreckungsrichtung parallele Schwenkachse schwenkbar ist, die unterhalb des flexiblen Flächengebildes in seiner Staulage verläuft. Dies gestattet eine besonders einfache Gestaltung der Betätigungshandhabe, wobei das Verschwenken der Betätigungshandhabe unmittelbar genutzt werden kann, um die Arretierungsklinke zu bewegen. Dies kann insbesondere durch eine einstückige Gestaltung der Betätigungshandhabe mit der Arretierungsklinke oder aber durch eine feste Verbindung der Betätigungshandhabe mit der Arretierungsklinke erreicht werden.

In einer Weiterbildung der Erfindung entspricht die Schwenkachse der Betätigungshandhabe der Drehachse der Übertragungswelle. Hierdurch wird erreicht, dass nicht sowohl die Betätigungshandhabe als auch die Übertragungswelle eine jeweils separate Lagerung brauchen. Stattdessen reicht es aus, die Betätigungshandhabe drehfest mit der ihrerseits gelagerten Übertragungswelle zu verbinden.

### Kurzbeschreibung der Zeichnungen

Weitere Vorteile und Merkmale der Erfindung ergeben sich aus den Ansprüchen sowie der nachfolgenden Beschreibung bevorzugter Ausführungsbeispiele der Erfindung, die anhand der Zeichnungen dargestellt sind. Dabei zeigen:
- Figur 1 a und 1 b: eine erste Ausführungsform der erfindungsgemäßen Rolloanordnung im zerlegten und im zusammengesetzten Zustand und
- Figur 2a bis 2c: die Funktionsweise einer erfindungsgemäßen Rolloanordnung anhand zweier weiterer Ausführungsformen.

### Detaillierte Beschreibung der Ausführungsbeispiele

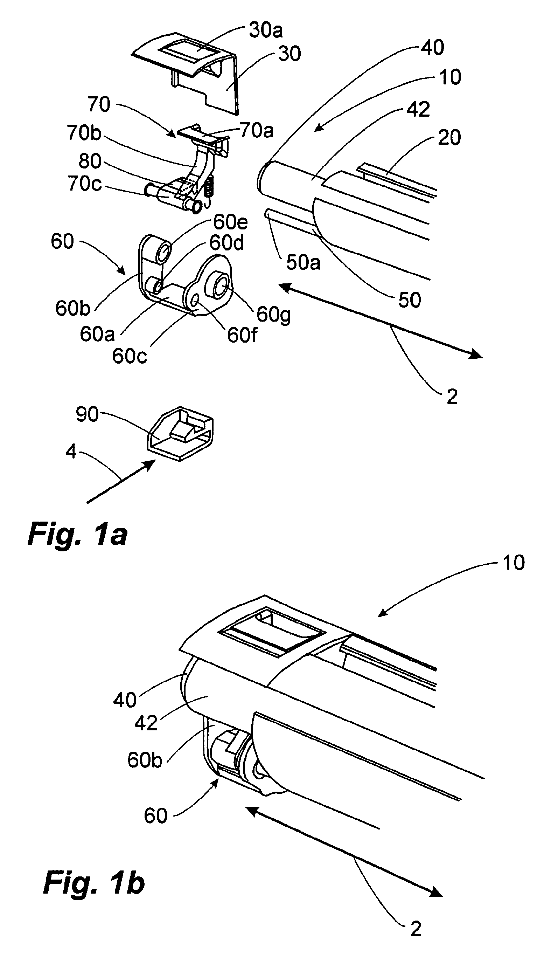

Figur 1a und 1b zeigen eine erste Ausführungsform einer erfindungsgemäßen Rolloanordnung. Zum besseren Verständnis zeigt dabei die Figur 1a den zerlegten und die Figur 1b den zusammengesetzten Zustand.

Anhand von Fig. 1a sollen zunächst die Einzelteile erläutert werden. Die Rolloanordnung 10 weist ein Gehäuse mit einem Hauptabschnitt 20 und einem sich im zusammengesetzten Zustand in Haupterstreckungsrichtung 2 daran anschließenden Seitenabschnitt 30 auf. In den Hauptabschnitt 20 sind eine Wickelwelle 40 mit darauf aufgerolltem flexiblem Flächengebilde 42 sowie eine Synchronisierungswelle 50 eingelegt, wobei das dargestellte Herausragen der Wickelwelle 40 und der Synchronisierungswelle aus dem Ende des Hauptabschnitts 20 des Gehäuses auch im zusammengesetzten Zustand in gleichem Maße vorliegt. Die Rolloanordnung 10 weist darüber hinaus einen Trägerabschnitt 60 sowie einen Betätigungshebel 70 auf, an dem eine Sperrklinke 80 einstückig angeformt ist. Der Trägerabschnitt 60 ist ein U-förmig ausgebildetes Bauteil mit einer Bodenwandung 60a und zwei Seitenwandungen 60b, 60c, von denen eine Seitenwandung 60c an der dem Hauptabschnitt 20 zugewandten Seite und eine Seitenwandung 60b an der abgewandten Seite angeordnet ist. Der Betätigungshebel 70 weist ausgehend von einer Griffmulde 70a einen vertikalen und leicht gebogenen Hebelabschnitt 70b auf, an dessen Ende eine Aufnahmehülse 70c vorgesehen ist. Von dieser Aufnahmehülse 70c erstreckt sich in etwa horizontal die Sperrklinke 80.

Diese Einzelteile sind im zusammengesetzten Zustand folgendermaßen miteinander verbunden: Der Betätigungshebel 70 mit angeformter Sperrklinke 80 ist in den Trägerabschnitt 60 zwischen dessen sich vertikal erstreckenden Seitenwandungen 60a, 60b eingesetzt. In der außenliegenden Seitenwandung 60b sind eine Aufnahmebohrung 60d für die Synchronisierungswelle 50 sowie ein Achsabschnitt 60e zur Aufnahme der Wickelwelle 40 angeformt, die sich jeweils in Richtung zum Hauptabschnitt 20 des Gehäuses erstrecken. Der gegenüberliegende Wandungsabschnitt 60c weist eine Durchgangsbohrung 60f. Der Trägerabschnitt 60 kann in nicht näher dargestellter Art und Weise mit dem Hauptabschnitt 20 fest verbunden werden. Die Synchronisierungswelle 50 erstreckt sich dann durch die Durchgangsbohrung 60f hinweg in den Bereich des eingesetzten Betätigungshebels 70. Sie ist durch die Aufnahmehülse 70c hindurchgeschoben, wobei in nicht näher dargestellter Art und Weise eine drehfeste Verbindung zwischen der Synchronisierungswelle 50 und der Aufnahmehülse 70c besteht. Das freie Ende 50a der Synchronisierungswelle 50 ist in der Aufnahmebohrung 60d aufgenommen und mittels dieser drehbar gelagert. Die Wickelwelle 40 erstreckt sich bis zur außen liegenden Seitenwandung 60b und ist dort auf den Achsabschnitt 60e aufgeschoben. Der Trägerabschnitt 60 ist nach oben durch den Seitenabschnitt 30 des Gehäuses verschlossen, wobei im Seitenabschnitt 30 eine Aussparung 30a vorgesehen ist, durch die dir Griffmulde 70a des Betätigungshebels 70 hindurchragt.

Auf der nicht dargestellten gegenüberliegenden Seite der Rolloanordnung ist der gleiche Aufbau vorgesehen, wobei die Synchronisierungswelle 50 sich bis zu dieser gegenüberliegenden Seite erstreckt.

Fig. 1b zeigt den zusammengesetzten Zustand. In diesem zusammengesetzten Zustand bildet die außen liegende Seitenwandung 60a des Trägerabschnitts 60 gleichzeitig die Seitenwandung der gesamten Rolloanordnung 10. Da sich auf ihrer Innenseite unmittelbar die Wickelwelle 40 der Rolloanordnung 10 anschließt, entspricht die Größe des darauf aufgerollten flexiblen Flächengebildes 42 in Haupterstreckungsrichtung 2 annähernd der Größe der Rolloanordnung 10 in Haupterstreckungsrichtung, so dass der Aufnahmeraum für die Rolloanordnung nicht breiter als der mit dem Flächengebilde abzudeckende Raum sein muss.

Zum Einsetzen der Rolloanordnung wird diese quer zur Haupterstreckungsrichtung in Richtung des Pfeils 4 in dafür vorgesehene Aufnahmen 90 eingeschoben, wobei die Bodenwandung 60a des Trägerabschnitts 60 zwischen einer Basisfläche 90a und einer Rastnase 90b der Aufnahme 90 eingeschoben wird. Die Sperrklinken 80 hintergreifen die Rastnasen 90b, so dass eine formschlüssige und nur durch die Betätigungshandhabe 70 lösbare Verbindung zwischen der fahrzeugfesten Aufnahme 90 und der Rolloanordnung geschaffen wird.

Die Bedienung zum Lösen ist aufgrund der beidseitig vorgesehenen Betätigungshebel 70 und deren Kopplung über die Synchronisierungswelle 50 sehr einfach, wobei dies bei dem Ausführungsbeispiel der Fig. 1 a und 1 b mit einem sehr einfachen und kostengünstigen Aufbau erreicht wird, dessen bewegliche Teile sich auf die Betätigungshebel 70 mit angeformter Sperrklinke 80 und die Synchronisierungswelle 50 beschränken.

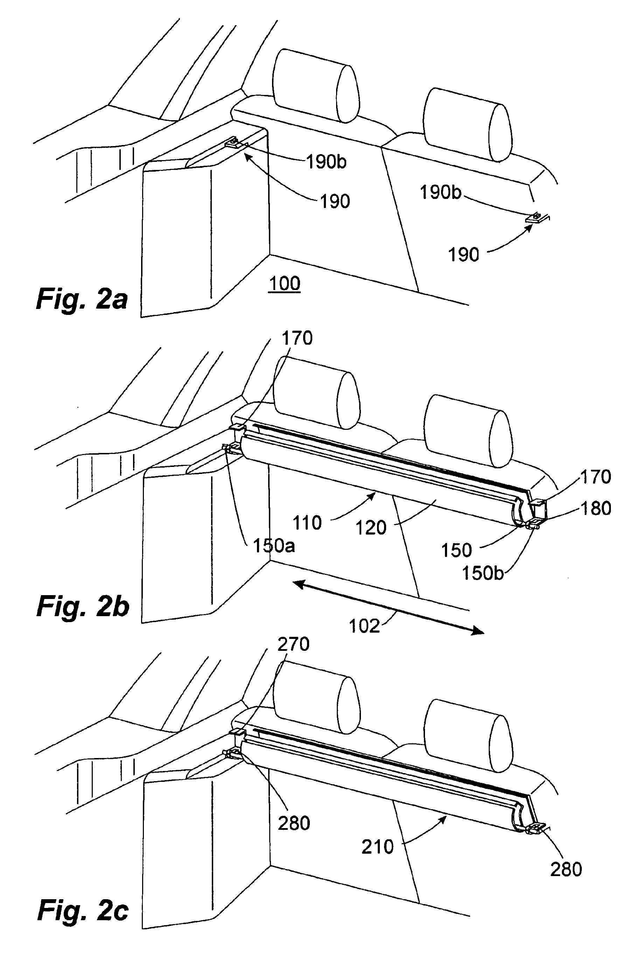

Die Fig. 2a bis Fig. 2c zeigen zwei weitere Ausführungsformen, die die Funktionsweise der Synchronisierung verdeutlichen sollen.

Die Fig. 2a zeigt dabei einen Heckladeraum 100 eines Kombifahrzeugs, der für das Einsetzen einer erfindungsgemäßen Rolloanordnung ausgebildet ist. Beidseitig des Heckladeraums sind Aufnahmen 190 zur Aufnahme einer Rolloanordnung vorgesehen. Die Aufnahmen weisen dabei jeweils eine in Fahrzeuglängsrichtung hinten offene Ausnehmung auf, in die jeweils ein Halteabschnitt der Rolloanordnung von hinten einschiebbar ist. Oberhalb der Ausnehmungen ist jeweils eine Rastnase 190b vorgesehen, die von den Sperrklinken der Rolloanordnung hintergriffen werden kann.

Die Fig. 2b zeigt eine zweite Ausführungsform einer erfindungsgemäßen Rolloanordnung, wobei zum Zwecke der Verdeutlichung der Synchronisierung als Bestandteile nur ein Gehäuse 120, die Synchronisierungswelle 150, die in das Gehäuse in Haupterstreckungsrichtung 102 eingelegt ist, und zwei Betätigungsmittel 170 an gegenüberliegenden Enden des Gehäuses 120, an denen jeweils eine Sperrklinke 180 angeformt ist, dargestellt sind.

Die Synchronisierungswelle 150 ist dabei in nicht dargestellter Form durch Lager an ihren beiden Enden 150a, 150b gehalten. Mit ihr sind die beiden Betätigungshebel 170 verbunden, wobei dies über einstückig mit dem jeweiligen Betätigungshebel verbundene Blechlaschen erreicht wird, deren Enden röhrenförmig gebogen sind und die durch radial eingesetzte Passstifte eine drehfeste Einheit mit der Synchronisierungswelle 150 bilden. In einem Abschnitt zwischen den Betätigungshebel 170 und den röhrenförmig gebogenen Blechlaschen ist jeweils die Sperrklinke 180 vorgesehen, die jeweils in Form einer rechteckigen Ausnehmung ausgebildet ist.

Die dargestellte Ausgestaltung erlaubt eine Betätigung beider Sperrklinken 180 mit nur einem der Betätigungshebel 170. Ein Bediener kann dementsprechend wahlweise von der linken oder der rechten Seite aus beide Sperrklinken 180 lösen, um die Rolloanordnung 110 entnehmen zu können. Der einfache Aufbau mit im Wesentlichen nur drei beweglichen Teilen, die dem Sperren und Lösen der Sperrklinken dienen, ist besonders kostengünstig und zuverlässig.

Bei der dritten Ausführungsform der Fig. 2c ist die Rolloanordnung 210 nur insofern gegenüber der Rolloanordnung 110 der Fig. 2b verändert, als dass an der rechten Seite kein Betätigungshebel vorgesehen ist. Stattdessen ist an der rechten Seite der Synchronisierungswelle lediglich eine drehfest mit der Synchronisierungswelle 270 verbundene Sperrklinke 280 vorgesehen. Bei dieser Ausgestaltung ist das Lösen beider Sperrklinken 280 demzufolge nur von einer Seite aus möglich.

## Patentansprüche

1. Rolloanordnung (10; 110; 210) zur Verwendung innerhalb eines Fahrzeugs, mit
- einem sich in eine Haupterstreckungsrichtung (2; 102) der Rolloanordnung (10; 110; 210) erstreckenden Gehäuse (20, 30; 120),
- einer in das Gehäuse (20, 30; 120) eingesetzten Rollowelle (40), die sich in Haupterstreckungsrichtung (2; 102) erstreckt,
- einem flexiblen Flächengebilde (42), das im Gehäuse (20, 30; 120) auf der Rollowelle (40) aufgerollt lagerbar und aus dem Gehäuse (20, 30; 120) quer zur Haupterstreckungsrichtung (2; 102) in eine Funktionslage ausziehbar ist,
- mindestens einer Arretierungsklinke (80; 180; 280), die im Bereich eines ersten Gehäuseendes und zum Zusammenwirken mit einer ersten fahrzeugfesten Aufnahme (90; 190) vorgesehen ist und die zwischen einem Arretierungszustand und einem gelösten Zustand beweglich ist, und
- mindestens einer Betätigungshandhabe (70; 170; 270), mittels derer die mindestens eine damit wirkverbundene Arretierungsklinke (80; 180; 280) bewegbar ist,
**dadurch gekennzeichnet, dass**
die mindestens eine Arretierungsklinke (80; 180; 280) sowohl im Arretierungszustand als auch im gelösten Zustand in Haupterstreckungsrichtung (2; 102) auf Höhe der Rollowelle (40) angeordnet ist.

2. Rolloanordnung nach Anspruch 1,
**dadurch gekennzeichnet, dass**
die Arretierungsklinke (80; 180; 280) orthogonal zur Haupterstreckungsrichtung (2; 102) beweglich ausgebildet ist.

3. Rolloanordnung nach Anspruch 1 oder 2,
**dadurch gekennzeichnet, dass**
die mindestens eine Betätigungshandhabe (70; 170; 270) in Haupterstreckungsrichtung (2; 102) auf Höhe der Rollowelle (40) angeordnet ist.

4. Rolloanordnung nach einem der vorstehenden Ansprüche,
**dadurch gekennzeichnet, dass**
die Betätigungshandhabe (70; 170; 270) an einer Oberseite der Rolloanordnung (10; 110; 210) vorgesehen ist und die Arretierungsklinke (80; 180; 280) an einer Unterseite der Rolloanordnung (10; 110; 210) vorgesehen ist.

5. Rolloanordnung nach einem der vorstehenden Ansprüche,
**dadurch gekennzeichnet, dass**
die Betätigungshandhabe (70; 170; 270) mittels eines Übertragungshebels (70b) mit der Arretierungsklinke (80; 180; 280) verbunden ist, der eine konkave Einbuchtung zur zumindest teilweisen Aufnahme des flexiblen Flächengebildes (42) in der Staulage aufweist.

6. Rolloanordnung nach einem der vorstehenden Ansprüche,
**dadurch gekennzeichnet, dass**
das Gehäuse (20, 30; 120) mehrteilig ausgebildet ist und in Haupterstreckungsrichtung (2; 102) aneinander angrenzend mindestens einen Hauptabschnitt (20) sowie einen Seitenabschnitt (30) aufweist, wobei der Seitenabschnitt (30) die mindestens eine Betätigungshandhabe (70; 170; 270) und das mindestens eine Arretierungsklinke (80; 180; 280) beinhaltet oder abdeckt.

7. Rolloanordnung nach einem der vorstehenden Ansprüche oder nach dem Oberbegriff von Anspruch 1,
**gekennzeichnet durch**
eine zweite Arretierungsklinke (80; 180; 280) im Bereich eines dem ersten Gehäuseende gegenüberliegenden zweiten Gehäuseendes, welche zum Zusammenwirken mit einer zweiten fahrzeugfesten Aufnahme (90) vorgesehen ist und die mittels eines Übertragungsmittels (50; 150) mit der Betätigungshandhabe (70; 170; 270) wirkverbunden ist, wobei die erste und die zweite Arretierungsklinke (80; 180; 280) mittels der Betätigungshandhabe (70; 170; 270) gemeinsam zwischen einem Arretierungszustand und einem gelösten Zustand orthogonal zur Haupterstreckungsrichtung (2; 102) bewegbar sind.

8. Rolloanordnung nach Anspruch 7,
**dadurch gekennzeichnet, dass**
das Übertragungsmittel (50; 150) eine um eine Drehachse drehbare Übertragungswelle (50; 150) ist, die in Haupterstreckungsrichtung (2; 102) verläuft und die vorzugsweise unterhalb des flexiblen Flächengebildes (42) in seiner Staulage angeordnet ist.

9. Rolloanordnung nach einem der Ansprüche 7 oder 8,
**dadurch gekennzeichnet, dass**
je eine Betätigungshandhabe (70; 170) an beiden Gehäuseenden vorgesehen ist, wobei beide Betätigungshandhaben (70; 170) mittels des Übertragungsmittels (50; 150) mit beiden Arretierungsklinken (80; 180) wirkverbunden sind.

10. Rolloanordnung nach einem der vorstehenden Ansprüche
**dadurch gekennzeichnet, dass**
die Betätigungshandhabe (70; 170; 270) ein schwenkbarer Betätigungshebel (70; 170; 270) ist, wobei der Betätigungshebel (70; 170; 270) vorzugsweise um eine zur Haupterstreckungsrichtung (2; 102) parallele Schwenkachse schwenkbar ist, die unterhalb des flexiblen Flächengebildes (42) in seiner Staulage verläuft.

11. Rolloanordnung nach Anspruch 10,
**dadurch gekennzeichnet, dass**
die Schwenkachse der Betätigungshandhabe der Drehachse der Übertragungswelle entspricht.
